# FASCICULE DE BREVET EUROPEEN

(11) **EP 3 476 141 B1**
(45) Date de publication et mention de la délivrance du brevet: **15.06.2022**
(21) Numéro de dépôt: 17740442.3
(22) Date de dépôt: 22.06.2017
(51) Int. Cl.: H04W 8/02, H04W 64/00, H04W 8/06, H04W 4/02, G06Q 30/02

(54) **PROCÉDÉ DE GESTION DE L'ÉTAT DE VEILLE D'UN TERMINAL MOBILE**
VERFAHREN ZUR VERWALTUNG DES BEREITSCHAFTSZUSTANDS EINES MOBILEN ENDGERÄTS
METHOD FOR MANAGING THE STANDBY STATE OF A MOBILE TERMINAL

(30) Priorité: 24.06.2016 FR 1655908
(43) Date de publication de la demande: 01.05.2019
(73) Titulaire: ORANGE, 92130 Issy-les-Moulineaux (FR)
(72) Inventeur: MOUQUET, Antoine, 92400 Courbevoie (FR); MOUAFIK, Ali-Amine, 92100 Boulogne Billancourt (FR)
(86) Numéro de dépôt international: PCT/FR2017/051665
(87) Numéro de publication internationale: WO 2017/220942

(56) Documents cités:
- WO-A1-2015/037820
- WO-A1-2015/063970
- US-A1- 2015 365 789

## Description

L'invention se situe dans le domaine général des télécommunications, et concerne plus particulièrement les communications d'un terminal mobile avec un réseau de paquets de données (« *Packet Data Network* »*,* ou PDN en anglais) via un réseau d'accès cellulaire.

L'invention est définie par les revendications jointes.

Dans le cadre de la présente invention, on désigne par « terminal mobile » tout objet portatif apte à participer à des communications sans-fil. Ce terminal mobile pourra, par exemple, être un téléphone mobile, ou un ordinateur portable, ou une tablette numérique.

Ce terminal mobile peut être connecté et enregistré auprès d'un cœur de réseau IP (Internet Protocol) par le biais d'un type d'accès quelconque, tel qu'un réseau GSM (Global System for Mobile Communications), un réseau UMTS (Universal Mobile Telecommunications System), un ensemble de lignes DSL (Digital Subscriber Line), un réseau Ethernet (norme ISO/IEC 8802-3), un réseau WiFi (norme IEEE 802.11), ou un réseau LTE (Long Term Evolution).

L'invention concerne, encore plus particulièrement, le passage du mode « veille » au mode « connecté » pour un terminal mobile. On rappelle que le « mode veille » consiste pour un terminal mobile à désactiver une partie de ses fonctionnalités, pour économiser son énergie et les ressources radio de la cellule dans laquelle il se situe, mais sans que le cœur de réseau ne libère la session de connectivité ; plus précisément, lorsqu'un terminal mobile est en veille, le cœur de réseau conserve le contexte de la session (adresse IP, informations de souscription, clés secrètes, et ainsi de suite), et connaît la localisation du terminal mobile avec un niveau de précision correspondant à une certaine zone appelée « TA-list » (voir détails ci-dessous). Lorsque le cœur de réseau reçoit un paquet de données destiné à un terminal mobile en veille, le réseau envoie un ou plusieurs messages dits de « paging » dans ladite zone TA-list ; or bien qu'étant en veille, le terminal mobile reste à l'écoute des messages de paging ; lorsqu'il reçoit un message de paging, il passe du mode « veille » au mode « connecté », et peut donc recevoir ledit paquet de données.

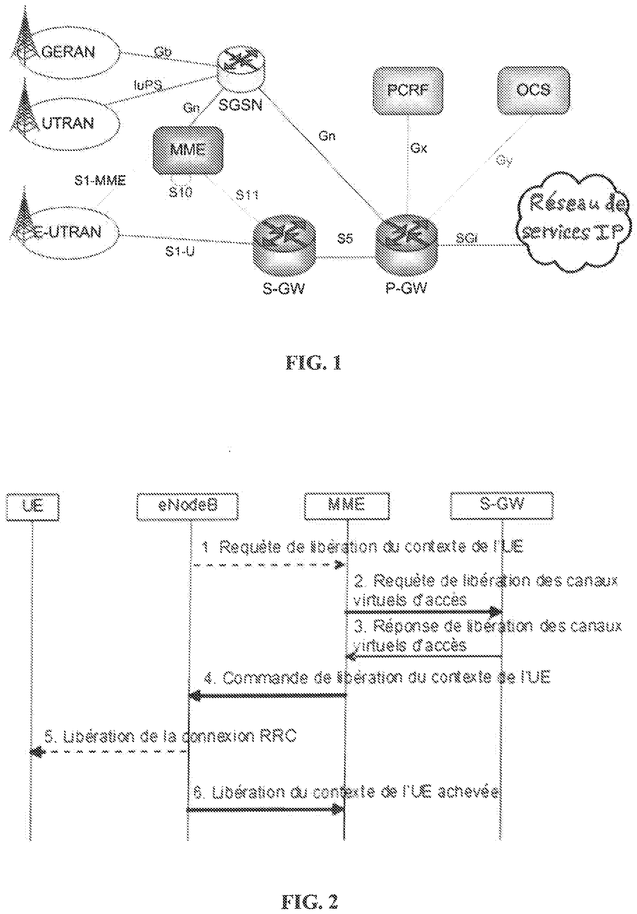

L'invention peut notamment être mise en œuvre dans une architecture de type EPC (Evolved Packet Core), telle que définie par le 3GPP (Third Generation Partnership Project) à partir de la « Release 8 ». La **figure 1** représente schématiquement cette architecture EPC, à laquelle on a connecté, à titre d'exemples, différents types de réseaux d'accès mobiles, tels que GERAN (GSM EDGE Radio Access Network) pour le GSM, UTRAN (Universal Terrestrial Radio Access Network) pour l'UMTS, ou E-UTRAN pour la LTE.

L'architecture EPC comprend trois principaux nœuds : un MME (initiales des mots anglais « *Mobility Management Entity* » signifiant « Entité de Gestion de Mobilité »), un S-GW (initiales des mots anglais « *Serving Gateway »* signifiant « Passerelle de Service »), et une passerelle P-GW (initiales des mots anglais « *Packet Data Network-Gateway* » signifiant « Passerelle de Réseau de Paquets de Données »). Le rôle de ces nœuds est le suivant :
- le MME est une entité du plan de contrôle (signalisation), dont le rôle principla est de gérer les procédures de mobilité (signalisation entre les nœuds du réseau cœur et avec les nœuds du réseau d'accès pour la mobilité) ;
- le S-GW assure notamment l'ancrage du média lorsque le mobile change de point d'accès radio en cours de session ; il assure également des fonctionnalités de comptage et la mise en mémoire tampon du média destiné à un utilisateur final lorsque la connectivité radio n'est pas encore établie ;
- le P-GW fournit notamment la connectivité IP aux utilisateurs finals (par exemple en attribuant des adresses IP), ainsi que des fonctionnalités de comptage, et d'application de politiques avancées de Qualité de Service (« *Quality of Service* », ou QoS, en anglais).

Dans ce cadre, le document de spécification « TS 23.203 » du groupe de normalisation 3GPP, version 13.7.0, définit une architecture dite « architecture PCC » (initiales des mots anglais « *Policy and Charging Control* ») visant à permettre un contrôle dynamique des ressources réseau en fonction d'informations collectées par une entité de contrôle dite « entité PCRF » (initiales des mots anglais « *Policy and Charging Rules Function* »). Ces informations peuvent être des informations associées au réseau (par exemple le type d'accès radio, des adresses de passerelles, ou la localisation du client), associées à un abonné (par exemple, des informations de souscription), ou encore associées à une application (par exemple, le type d'application, ou le type de média). L'entité PCRF adapte et contrôle ainsi l'usage des ressources réseau en fonction notamment de services requis par l'abonné et de son profil d'abonné. Pour cela l'entité PCRF fournit à une entité d'application de règles de contrôle, dite « entité PCEF » (initiales des mots anglais « *Policy and Charging Enforcement Function* »), des règles de contrôle d'une session de communication entre un terminal mobile et un réseau de communication. Ces règles de contrôle sont communément appelées « règles PCC ». L'entité PCEF est souvent constituée par un module de la passerelle P-GW (mentionnée ci-dessus), qui est alors contrôlée par le PCRF.

Lors de l'ouverture d'une session de connectivité IP (« IP CAN session »), le PCEF (P-GW) ouvre une session de commande associée vers le PCRF, et lui communique les caractéristiques demandées pour cette session de connectivité. En fonction de ces caractéristiques et d'autres informations provenant de plusieurs autres sources, le PCRF détermine la politique (qualité de service, tarification à mettre en place, autorisation d'accès, et ainsi de suite) à appliquer pour les différents services disponibles via la session en cours. Cette politique peut être modifiée en cours de session si certains événements, paramétrés par l'opérateur, se produisent durant la session. En fonction des règles de tarification envoyées par le PCRF, le PCEF décide ou non d'ouvrir une session avec une entité, dite entité OCS (initiales des mots anglais « *Online Charging System* »), en charge de contrôler en temps réel le crédit de l'abonné.

Selon la dernière « Release » des spécifications publiées par le 3GPP, en particulier la spécification TS 23.203, il est possible d'activer un évènement déclencheur au niveau du PCEF (P-GW) reposant sur la modification des données de localisation de l'utilisateur. Lorsque cet élément déclencheur est armé, les messages de signalisation échangés entre le MME, le S-GW et le P-GW pour la gestion de la session de connectivité (création, modification, fermeture) doivent indiquer la localisation de l'utilisateur, et le MME doit générer une modification de « l'IP-CAN session » dès que la localisation de l'utilisateur change. Ainsi, le PCEF (PGW) peut informer le PCRF en temps réel du changement de localisation de l'utilisateur *via* la session de contrôle associée à la session de connectivité. Le PCRF peut alors, en fonction de sa configuration, décider par exemple d'une modification de QoS (par exemple, de bande passante) ou de tarification en fonction de la localisation de l'utilisateur, et cela en temps réel.

Les spécifications 3GPP prévoient plusieurs niveaux de granularité de localisation :
- niveau cellule (identifiée par un identifiant « cell id ») : c'est la granularité de localisation la plus fine ;
- niveau zone géographique (identifiée par une « *tracking area* », notée « TA ») : une TA couvre une ou plusieurs cellules (selon la densité de la zone) ; et
- niveau liste de zones géographiques (« *tracking area list* »*,* notée « TA-list »).

Chaque point d'accès d'un réseau mobile diffuse régulièrement un signal d'identification TAI (Tracking Area Identity) de la TA desservie par ce point d'accès, et chaque terminal mobile prend en compte l'identité de la TA dans laquelle il se trouve, qu'il soit connecté ou en veille. Par ailleurs, lorsqu'un terminal mobile s'attache au réseau, le réseau l'enregistre dans une ou plusieurs TA comprenant la TA dans laquelle il se trouve, et lui fournit, au moyen d'un message « *Attach Accept* », la TA-list dans laquelle il est enregistré ; de même, lorsqu'un terminal mobile change de TA et que la nouvelle TA ne figure pas dans la TA-list dans laquelle il est enregistré, le réseau l'enregistre dans une ou plusieurs TA comprenant la (nouvelle) TA dans laquelle il se trouve, et lui fournit, au moyen d'un message « *TAU accept* », la TA-list dans laquelle il est enregistré. Cette TA-list est prise en compte par le terminal mobile, qu'il soit connecté ou en veille.

Lorsqu'un terminal mobile en mode « veille » entre dans une TA ne faisant pas partie de la TA-list dans laquelle il est enregistré, il le notifie au réseau par l'envoi d'un message « *Tracking Area Update* », noté « TAU » ; pour ce faire, il repasse en mode « connecté », c'est-à-dire qu'il réactive ses ressources de communication radio. En revanche (toujours en mode « veille »), dans le cas d'un changement de cellule ou de changement de TA au sein de la même TA-list, le terminal mobile n'émet pas cette notification (le réseau aurait été notifié du changement de localisation si le terminal mobile avait été en mode « connecté »).

Par ailleurs, la spécification TS 23.401 du 3GPP, version 13.1.0, définit une procédure de signalisation de présence dans une zone de signalisation de présence prédéfinie, dite zone PRA (initiales des mots anglais « *Présence Reporting Area* »), constituée d'une ou plusieurs zones géographiques TA. Cette procédure, dite « procédure PRA », vise à réduire le trafic réseau dû à un changement de localisation d'un terminal mobile en évitant une notification systématique de ce changement vers différentes entités du réseau. Selon cette procédure, un changement de localisation est notifié seulement lorsque le terminal mobile entre ou sort de l'une desdites zones PRA. Cette procédure PRA est susceptible d'être gérée par le PCRF ou par l'entité OCS (mentionnée ci-dessus).

Lorsque cette procédure PRA est gérée par le PCRF, celui-ci détermine, à l'aide des informations de souscription de l'abonné, si la session de connectivité à établir nécessite l'activation de la signalisation de présence. Si tel est le cas, l'entité de contrôle PCRF envoie à l'entité d'application de règles PCEF un identifiant de zone de signalisation de présence associé à l'abonné, lors de l'envoi des règles de contrôle à cette même entité. L'identifiant indique ainsi à l'entité d'application de règles PCEF que la signalisation de présence doit être activée, c'est-à-dire que l'entité de contrôle PCRF souhaite être notifiée lorsque le terminal mobile entre ou sort de la zone de signalisation de présence associée à l'abonné. L'entité de gestion de crédits OCS peut uniquement dans ce cas demander à l'entité d'application de règles PCEF à être notifiée d'un changement de zone de signalisation de présence pour la même zone que l'entité de contrôle PCRF ; cela permet notamment d'éviter un conflit de zone de signalisation de présence, pouvant par exemple affecter la facturation des usages de l'abonné.

Lorsque la procédure PRA n'est pas gérée par le PCRF, l'entité de gestion de crédits OCS peut la gérer elle-même en envoyant à l'entité d'application de règles PCEF un identifiant de zone de signalisation de présence défini localement. L'entité de gestion de crédits OCS active ainsi elle-même la signalisation de présence, et indique son souhait d'être notifiée lorsque le terminal mobile entre ou sort de la zone de signalisation de présence identifiée par l'identifiant envoyé à l'entité d'application de règles PCEF.

De nos jours, les opérateurs réseau souhaitent mettre en place des services publicitaires consistant à envoyer un certain message publicitaire aux utilisateurs entrant dans une certaine zone marchande (exemple, un centre commercial) ; naturellement, les commanditaires d'un tel service publicitaire souhaitent que le message publicitaire soit envoyé à tous les terminaux entrant dans cette zone marchande.

Conformément à la procédure PRA décrite ci-dessus, lorsqu'une entité PCRF détermine qu'un terminal mobile est concerné par un service publicitaire nécessitant une notification de localisation vers l'amont, le PCRF demande au PCEF (P-GW) de lui notifier les changements de localisation pour ce terminal mobile lorsque ce dernier entre ou sort de l'ensemble de zones concernées par le service publicitaire. Cette demande est ensuite transmise à l'entité S-GW puis à l'entité MME selon les procédures de création de session de connectivité IP (comprenant les messages « *create session request* » et « *create session response* ») décrites dans les spécifications TS 23.401 et TS 29.274 du 3GPP.

Cependant, comme expliqué ci-dessus, un terminal mobile en mode « veille » ne repasse en mode « connecté » que si le déplacement du terminal mobile entraîne une sortie du terminal mobile de la TA-list dans laquelle il est enregistré ; si la PRA concernée par le service publicitaire est entièrement incluse dans la TA-list, un terminal mobile en veille pourrait entrer ou sortir de cette PRA tout en restant dans la même TA-list, de sorte qu'il restera en veille et ne recevra pas le message publicitaire.

Le document US 2015/0365789 décrit un procédé de signalement de la localisation d'un équipement utilisateur dans un environnement de réseau cellulaire.

Le document WO 2015/037820 décrit un procédé pour fixer et mettre à jour une « tracking area »dans un réseau C-RAN (Cloud Radio Access Network).

La présente invention concerne donc, selon un premier aspect, un procédé de gestion de l'état de veille d'un terminal mobile dans un réseau de paquets de données, comprenant les étapes suivantes :
- lors de l'ouverture d'une session de connectivité pour un terminal mobile, une entité de gestion de mobilité dudit réseau reçoit une liste de zones, dite « PRA-list », configurée en fonction d'un service donné et de la localisation dudit terminal mobile,

- lorsque le terminal mobile passe du mode « connecté » au mode « veille », le terminal mobile reçoit ladite liste de zones « PRA-list » de la part de ladite entité de gestion de mobilité *via* un point d'accès du réseau, et
- lorsque le terminal mobile entre dans l'une des zones formant la liste de zones « PRA-list », il passe du mode « veille » au mode « connecté », et envoie une notification à ladite entité de gestion de mobilité *via* un point d'accès du réseau.

Grâce à ces dispositions, on améliore la mise en œuvre de services de diffusion de messages (par exemple publicitaires), en permettant aux terminaux initialement en veille d'y accéder. Cela étant, le procédé selon l'invention évite de généraliser l'émission d'une notification vers l'amont de manière systématique : cette émission n'a lieu que pour des usages bien précis, tels qu'un service publicitaire dans un centre commercial ; on protège ainsi le réseau d'une signalisation excessive.

Selon des caractéristiques particulières, si ledit terminal mobile est en mode « veille » lorsqu'il sort ensuite de l'une des zones formant ladite liste de zones « PRA-list », alors le terminal mobile passe du mode « veille » au mode « connecté », et envoie une notification à ladite entité de gestion de mobilité *via* un point d'accès du réseau.

Grâce à ces dispositions, lorsque ledit terminal mobile sort de la zone dans laquelle il est entré précédemment conformément aux étapes décrites succinctement ci-dessus, il peut en informer le gestionnaire dudit service, qui saura qu'il est dès lors inutile d'envoyer un message relatif au service à ce terminal mobile.

Selon un deuxième aspect, l'invention concerne divers dispositifs.

Elle concerne ainsi, premièrement un terminal mobile. Ledit terminal mobile est remarquable en ce qu'il possède des moyens pour :
- recevoir, lorsqu'il passe du mode « connecté » au mode « veille », une liste de zones, dite « PRA-list », de la part d'une entité de gestion de mobilité *via* un point d'accès du réseau, et
- lorsqu'il entre dans l'une des zones formant ladite liste de zones « PRA-list », passer du mode « veille » au mode « connecté », et envoyer une notification à ladite entité de gestion de mobilité *via* un point d'accès du réseau.

Selon des caractéristiques particulières, ledit terminal mobile possède en outre des moyens pour, lorsqu'il sort en mode « veille » de l'une des zones formant ladite liste de zones « PRA-list », passer du mode « veille » au mode « connecté », et envoyer une notification à ladite entité de gestion de mobilité *via* un point d'accès du réseau.

L'invention concerne aussi, deuxièmement, une entité de gestion de mobilité d'un réseau de paquets de données. Ladite entité de gestion est remarquable en ce qu'elle possède des moyens pour envoyer à un point d'accès du réseau auquel est connecté un terminal mobile donné, lorsque ledit terminal mobile passe du mode « connecté » au mode « veille », une liste de zones, dite « PRA-list », configurée en fonction d'un service donné et de la localisation du terminal mobile.

L'invention concerne aussi, troisièmement, un nœud d'accès d'un réseau de paquets de données. Ledit nœud d'accès est remarquable en ce qu'il possède des moyens pour envoyer à un terminal mobile, lorsque ledit terminal mobile passe du mode « connecté » au mode « veille », une liste de zones, dite « PRA-list », configurée en fonction d'un service donné et de la localisation du terminal mobile.

Les avantages offerts par ces dispositifs sont essentiellement les mêmes que ceux offerts par le procédé corrélatifs succinctement exposé ci-dessus.

L'invention vise également un réseau de paquets de données, comprenant :
- au moins un terminal mobile tel que décrit succinctement ci-dessus,
- au moins une entité de gestion tel que décrite succinctement ci-dessus, et
- au moins un nœud d'accès tel que décrit succinctement ci-dessus.

On notera qu'il est possible de réaliser ces dispositifs dans le contexte d'instructions logicielles et/ou dans le contexte de circuits électroniques.

L'invention vise également un programme d'ordinateur téléchargeable depuis un réseau de communication et/ou stocké sur un support lisible par ordinateur et/ou exécutable par un microprocesseur. Ce programme d'ordinateur est remarquable en ce qu'il comprend des instructions pour l'exécution des étapes du procédé de gestion de l'état de veille succinctement exposé ci-dessus, lorsqu'il est exécuté sur un ordinateur.

Les avantages offerts par ce programme d'ordinateur sont essentiellement les mêmes que ceux offerts par ledit procédé.

D'autres aspects et avantages de l'invention apparaîtront à la lecture de la description détaillée ci-dessous de modes de réalisation particuliers, donnés à titre d'exemples non limitatifs. La description se réfère aux figures qui l'accompagnent, dans lesquelles :
- la figure 1 représente une architecture de réseau classique de type EPC,
- la figure 2 représente schématiquement la procédure classique dite de « S1 release », et
- la figure 3 représente une procédure de mise en veille d'un terminal mobile selon un mode de réalisation de l'invention.

On va décrire à présent un mode de réalisation de l'invention qui utilise une procédure de mise en veille d'un terminal mobile représentant une évolution d'une procédure classique dite « S1 release ».

Cette procédure « S1 release » est décrite dans la Section 5.3.5 de la spécification TS 23.401, v10.2.1, du 3GPP. Elle peut être par exemple initiée par un eNodeB (point d'accès du réseau E-UTRAN, connecté au S-GW via l'interface S1-U et au MME via l'interface S1-MME), ou par un MME. La procédure « S1 release » permet de relâcher tous les canaux virtuels (« *bearers* » en anglais) d'un terminal mobile sur l'interface S1-U, quel que soit le nombre de sessions IP et de canaux virtuels IP-CAN existants, qui sont néanmoins maintenus dans le cœur de réseau.

Comme illustré sur la **figure 2**, la procédure « S1 release » classique comprend les étapes suivantes.

Lors d'une étape E1, un MME reçoit (par exemple, de la part d'un eNodeB) une requête de mise en veille relative à un terminal mobile (noté UE pour « User Equipement », c'est-à-dire « dispositif-utilisateur », sur la figure 2) situé dans la cellule desservie par cet eNodeB.

Lors d'une étape E2, le MME envoie au S-GW une requête de libération des canaux virtuels (*bearers*) utilisés par ce terminal mobile.

Lors d'une étape E3, le S-GW envoie un accusé de réception au MME.

Lors d'une étape E4, le MME envoie un accusé de réception à l'eNodeB.

Lors d'une étape E5, l'eNodeB envoie au terminal mobile une notification de libération de leur connexion radio mutuelle, par exemple en utilisant le protocole de signalisation « Radio Resource Control » (RRC).

Enfin, lors d'une étape E6, l'eNodeB envoie au MME une confirmation d'exécution de ladite libération de connexion.

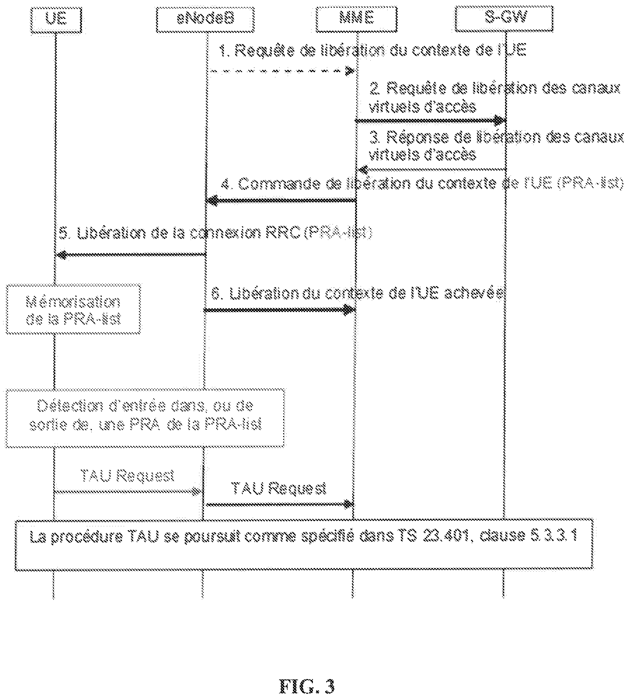

On va décrire à présent, en référence à la **figure 3**, un mode de réalisation de l'invention.

Selon une première phase, lors de l'ouverture d'une session de connectivité (IP CAN session) pour un terminal mobile, le PCRF transmet au MME (via le P-GW et le S-GW) une liste de zones, que l'on appellera « PRA-list », configurée en fonction d'un service particulier de diffusion de messages (par exemple de messages publicitaires) visant un ensemble de terminaux mobiles. Le PCRF doit préciser aussi les zones PRA pour lesquelles il souhaite être notifié, que le terminal mobile soit en mode « veille » ou en mode « connecté ».

Cette liste de zones peut par exemple être commodément construite en fonction de la localisation du terminal mobile. De préférence, l'ensemble de zones figurant dans cet « PRA-list » est strictement inclus dans la TA-list où le terminal mobile est enregistré. Il peut s'agir d'un nombre réduit de zones de cette TA-list proches de la position du terminal mobile, la probabilité que le terminal mobile entre dans une zone plus éloignée sans être entre-temps repassé en mode « connecté » étant jugée faible.

Lors d'une deuxième phase, le terminal mobile passe du mode « connecté » au mode « veille ». Cette deuxième phase comprend les étapes suivantes.

Les étapes E'1 à E'3 sont identiques aux étapes E1 à E3 décrites ci-dessus en référence à la figure 2.

Lors d'une étape E'4, le MME envoie un accusé de réception à l'eNodeB comme dans la procédure classique, mais en y incluant une liste de zones, que l'on appellera « PRA-list ».

Lors d'une étape E'5, l'eNodeB envoie au terminal mobile une notification de libération de leur connexion radio mutuelle comme dans la procédure classique, mais en y incluant ladite liste de zones « PRA-list », qui est alors enregistrée par le terminal mobile. A cet égard, il importe de noter que, dans la procédure « S1 release » classique, aucune liste de zones (pas même la TA-list) n'est transmise au terminal mobile.

Enfin, lors d'une étape E'6, l'eNodeB envoie au MME une confirmation d'exécution de ladite libération de connexion, comme dans la procédure classique.

Lors d'une troisième phase, lorsque le terminal mobile entre ou sort de l'une des zones formant la « PRA-list », il passe du mode « veille » au mode « connecté », et notifie le MME (par exemple au moyen d'un message TAU classique, via l'eNodeB). Le MME en informe alors le PCRF selon la procédure classique.

L'invention peut être mise en œuvre au sein des nœuds de réseaux de communication, par exemple des terminaux mobiles, des entités de gestion de mobilité ou des points d'accès réseau, au moyen de composants logiciels et/ou matériels.

Les composants logiciels pourront être intégrés à un programme d'ordinateur classique de gestion de nœud de réseau. C'est pourquoi, comme indiqué ci-dessus, la présente invention concerne également un système informatique. Ce système informatique comporte de manière classique une unité centrale de traitement commandant par des signaux une mémoire, ainsi qu'une unité d'entrée et une unité de sortie. De plus, ce système informatique peut être utilisé pour exécuter un programme d'ordinateur comportant des instructions pour la mise en œuvre du procédé de gestion de l'état de veille selon l'invention.

En effet, l'invention vise aussi un programme d'ordinateur téléchargeable depuis un réseau de communication comprenant des instructions pour l'exécution des étapes d'un procédé de gestion de l'état de veille selon l'invention, lorsqu'il est exécuté sur un ordinateur. Ce programme d'ordinateur peut être stocké sur un support lisible par ordinateur et peut être exécutable par un microprocesseur.

Ce programme peut utiliser n'importe quel langage de programmation, et se présenter sous la forme de code source, code objet, ou de code intermédiaire entre code source et code objet, tel que dans une forme partiellement compilée, ou dans n'importe quelle autre forme souhaitable.

L'invention vise aussi un support d'informations, inamovible, ou partiellement ou totalement amovible, lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comprendre un moyen de stockage, tel qu'une ROM, par exemple un CD ROM ou une ROM de circuit microélectronique, ou un moyen d'enregistrement magnétique, tel qu'un disque dur, ou encore une clé USB (« *USB flash drive* » en anglais).

D'autre part, le support d'informations peut être un support transmissible tel qu'un signal électrique ou optique, qui peut être acheminé via un câble électrique ou optique, par radio ou par d'autres moyens. Le programme d'ordinateur selon l'invention peut être en particulier téléchargé sur un réseau de type Internet.

En variante, le support d'informations peut être un circuit intégré dans lequel le programme est incorporé, le circuit étant adapté pour exécuter ou pour être utilisé dans l'exécution du procédé de gestion de l'état de veille selon l'invention.

## Revendications

1. Procédé de gestion de l'état de veille d'un terminal mobile dans un réseau de paquets de données, comprenant les étapes suivantes :
- lors de l'ouverture d'une session de connectivité pour un terminal mobile, une entité de gestion de mobilité dudit réseau reçoit une liste de zones, dite « PRA-list », configurée en fonction d'un service donné et de la localisation dudit terminal mobile,
- lorsque le terminal mobile passe du mode « connecté » au mode « veille », le terminal mobile reçoit ladite liste de zones « PRA-list » de la part de ladite entité de gestion de mobilité *via* un point d'accès du réseau, et
- lorsque le terminal mobile entre dans l'une des zones formant la liste de zones « PRA-list », il passe du mode « veille » au mode « connecté », et envoie une notification à ladite entité de gestion de mobilité *via* un point d'accès du réseau.

2. Procédé de gestion selon la revendication 1, **caractérisé en ce que**, si ledit terminal mobile est en mode « veille » lorsqu'il sort ensuite de l'une des zones formant ladite liste de zones « PRA-list », alors le terminal mobile passe du mode « veille » au mode « connecté », et envoie une notification à ladite entité de gestion de mobilité *via* un point d'accès du réseau.

3. Entité de gestion de mobilité d'un réseau de paquets de données, **caractérisée en ce qu'**elle possède des moyens pour :
recevoir lors de l'ouverture d'une session de connectivité pour un terminal mobile donné dans le réseau, une liste de zones, dite « PRA-list », configurée en fonction d'un service donné et de la localisation dudit terminal mobile ;
envoyer à un point d'accès du réseau auquel est connecté le terminal mobile, lorsque ledit terminal mobile passe du mode « connecté » au mode « veille », ladite liste de zones « PRA-list » ;
recevoir une notification dudit terminal mobile via un point d'accès du réseau, lorsque le terminal mobile entre dans l'une des zones formant ladite liste de zones « PRA-list » et passe du mode « veille » au mode « connecté ».

4. Réseau de paquets de données, **caractérisé en ce qu'**il comprend :
- au moins une entité de gestion de mobilité selon la revendication 3,
- au moins un nœud d'accès ; et
- au moins un terminal mobile, possédant des moyens pour :
∘ recevoir, lorsqu'il passe du mode « connecté » au mode « veille », la liste de zones « PRA-list » de la part de l'entité de gestion de mobilité *via* un dit noeud d'accès du réseau, et
∘ lorsqu'il entre dans l'une des zones formant ladite liste de zones « PRA-list », passer du mode « veille » au mode « connecté », et envoyer une notification à ladite entité de gestion de mobilité *via* un dit noeud d'accès du réseau.

5. Réseau de paquets de données selon la revendication 4 dans lequel, ledit terminal mobile possède en outre des moyens pour, lorsqu'il sort en mode « veille » de l'une des zones formant ladite liste de zones « PRA-list », passer du mode « veille » au mode « connecté », et envoyer une notification à ladite entité de gestion de mobilité *via* un dit noeud d'accès du réseau.

## Patentansprüche

1. Verfahren zur Verwaltung des Bereitschaftszustands eines mobilen Endgeräts in einem Paketdatennetz, das die folgenden Schritte umfasst:
- bei Eröffnung einer Verbindungssitzung für ein mobiles Endgerät empfängt eine Mobilitätsverwaltungseinheit des Netzes eine Bereichsliste, "PRA-List" genannt, die abhängig von einem bestimmten Dienst und der Lokalisierung des mobilen Endgeräts konfiguriert ist,
- wenn das mobile Endgerät vom Modus "verbunden" in den Modus "Bereitschaft" übergeht, empfängt das mobile Endgerät die Bereichsliste "PRA-List" von der Mobilitätsverwaltungseinheit über einen Zugangspunkt des Netzes, und
- wenn das mobile Endgerät in einen der Bereiche eintritt, die die Bereichsliste "PRA-List" bilden", geht es von Modus "Bereitschaft" in den Modus "verbunden" über und sendet eine Meldung an die Mobilitätsverwaltungseinheit über einen Zugangspunkt des Netzes.

2. Verfahren zur Verwaltung nach Anspruch 1, **dadurch gekennzeichnet, dass** das mobile Endgerät, wenn das mobile Endgerät im Modus "Bereitschaft" ist und anschließend aus einem der Bereiche heraustritt, die die Bereichsliste "PRA-List" bilden, dann vom Modus "Bereitschaft" in den Modus "verbunden" übergeht und eine Meldung an die Mobilitätsverwaltungseinheit über einen Zugangspunkt des Netzes sendet.

3. Mobilitätsverwaltungseinheit eines Paketdatennetzes, **dadurch gekennzeichnet, dass** es Mittel zu Folgendem besitzt:
Empfangen einer Bereichsliste, "PRA-List" genannt, die abhängig von einem bestimmten Dienst und der Lokalisierung des mobilen Endgeräts konfiguriert ist, bei Eröffnung einer Verbindungssitzung für ein bestimmtes Endgerät im Netz;
Senden der Bereichsliste "PRA-List" an einen Zugangspunkt des Netzes, mit dem das mobile Endgerät verbunden ist, wenn das mobile Endgerät vom Modus "verbunden" in den Modus "Bereitschaft" übergeht;
Empfangen einer Meldung des mobilen Endgeräts über einen Zugangspunkt des Netzes, wenn das mobile Endgerät in einen der Bereiche eintritt, die die Bereichsliste "PRA-List" bilden, und vom Modus "Bereitschaft" in den Modus "verbunden" übergeht.

4. Paketdatennetz, **dadurch gekennzeichnet, dass** es umfasst:
- mindestens eine Mobilitätsverwaltungseinheit nach Anspruch 3,
- mindestens einen Zugangsknoten; und
- mindestens ein Endgerät, das Mittel zu Folgendem besitzt:
o Empfangen einer Bereichsliste "PRA-List" von der Mobilitätsverwaltungseinheit über einen Zugangsknoten des Netzes, wenn es vom Modus "verbunden" in den Modus "Bereitschaft" übergeht, und
o wenn es in einen der Bereiche eintritt, die die Bereichsliste "PRA-List" bilden, Übergehen vom Modus "Bereitschaft" in den Modus "verbunden" und Senden einer Meldung an die Mobilitätsverwaltungseinheit über einen Zugangsknoten des Netzes.

5. Paketdatennetz nach Anspruch 4, wobei das mobile Endgerät außerdem Mittel zum Übergehen vom Modus "Bereitschaft" in den Modus "verbunden" und zum Senden einer Meldung an die Mobilitätsverwaltungseinheit über einen Zugangsknoten des Netzes besitzt, wenn es aus dem Modus "Bereitschaft" eines der Bereiche, die die Bereichsliste "PRA-List" bilden, austritt.

## Claims

1. Method for managing the standby state of a mobile terminal in a data packet network, comprising the following steps:
- when a connectivity session is opened for a mobile terminal, a mobility management entity of said network receives a list of areas, called "PRA list", configured based on a given service and on the location of said mobile terminal,
- when the mobile terminal changes from "connected" mode to "standby" mode, the mobile terminal receives said list of areas "PRA list" from said mobility management entity via a network access point, and
- when the mobile terminal enters one of the areas forming the list of areas "PRA list", it changes from "standby" mode to "connected" mode and sends a notification to said mobility management entity via a network access point.

2. Management method according to Claim 1, **characterized in that**, if said mobile terminal is in "standby" mode when it then leaves one of the areas forming said list of areas "PRA list", then the mobile terminal changes from "standby" mode to "connected" mode and sends a notification to said mobility management entity via a network access point.

3. Mobility management entity of a data packet network, **characterized in that** said mobility management entity has means for:
receiving, when a connectivity session is opened for a given mobile terminal in the network, a list of areas, called "PRA list", configured based on a given service and on the location of said mobile terminal;
sending said list of areas "PRA list" to a network access point to which the mobile terminal is connected, when said mobile terminal changes from "connected" mode to "standby" mode;
receiving a notification from said mobile terminal via a network access point, when the mobile terminal enters one of the areas forming said list of areas "PRA list" and changes from "standby" mode to "connected" mode.

4. Data packet network, **characterized in that** it comprises:
- at least one mobility management entity according to Claim 3,
- at least one access node; and
- at least one mobile terminal, having means for:
o receiving, when it changes from "connected" mode to "standby" mode, the list of areas "PRA list" from the mobility management entity via a said network access node, and
o when it enters one of the areas forming said list of areas "PRA list", changing from "standby" mode to "connected" mode, and sending a notification to said mobility management entity via a said network access node.

5. Data packet network according to Claim 4, wherein said mobile terminal furthermore has means for, when it leaves one of the areas forming said list of areas "PRA list" in "standby" mode, changing from "standby" mode to "connected" mode, and sending a notification to said mobility management entity via a said network access node.
